# EUROPEAN PATENT APPLICATION

(11) **EP 4 521 273 A1**
(43) Date of publication of application: **12.03.2025**
(21) Application number: 24195526.9
(22) Date of filing: 21.08.2024
(51) Int. Cl.: G06F 21/31, G06F 21/64, H04L 51/52, H04L 9/40, H04N 21/442

(54) **SERVICE DEPLOYMENT CONTROL**

(30) Priority: 06.09.2023 US 202318461570
(71) Applicant: Oy Idlis Ab, 00180 Helsinki (FI)
(72) Inventor: Heikkilä, Mikko, 00180 Helsinki (FI); Granden, Niclas, 00180 Helsinki (FI); Kivistö, Mikko, 00180 Helsinki (FI); Grandell, Thomas, 00180 Helsinki (FI); Rautonen, Tapio, 00180 Helsinki (FI)
(74) Representative: Espatent Oy

(57) **Abstract**

Method and mobile device for storing a mobile application that is cryptographically associated with a digital certificate; and automatically: signing the user into a personal user profile of a companion service with the mobile application or prompting the user to perform the signing into the personal user profile; monitoring by the mobile application incoming messages from the companion service when signed into the personal user profile, and accordingly presenting the incoming messages to the user with the user interface; and acknowledging presented messages to the companion service with a receipt that is cryptographically bound to the digital certificate and the user profile. Corresponding backend service system and method.

## Description

### TECHNICAL FIELD

The present disclosure generally relates to service deployment control.

### BACKGROUND

This section illustrates useful background information without admission of any technique described herein representative of the state of the art.

Digital services can be operated through a myriad of different devices by virtually anyone, anytime, anywhere. There are also numerous access control solutions for explicitly restricting access of given set of services based on an identity of a person. However, explicit access restriction is laborious and prone to errors, and there are scenarios in which it is also necessary to provide users with desired information as a pre-requisite of starting to use or continuing use of a digital service. For example, in a large organisation, access to digital services provided for staff's internal use may require continual instruction of staff re appropriate information security measures. Social media services may suffer from harmful postings that could be curbed with delivery of educating instructions and advice. It is seen desirable to subject use of a digital service to controlled consumption of supplementary messages with a same mobile device that serves to provide access to the digital service.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect there is provided a user data terminal comprising
a user interface;
at least one memory comprising computer program code; and
at least one processor configured to cause, according to the computer program code, the user data terminal to store a mobile application that is cryptographically associated with a digital certificate;
the at least one processor being further configured to cause, according to the computer program code, the user data terminal to automatically
sign the user into a personal user profile of a companion service with the mobile application or prompt the user to perform the signing into the personal user profile;
monitor by the mobile application incoming messages from the companion service when signed into the personal user profile, and accordingly present the incoming messages to the user with the user interface; and
acknowledge presented messages to the companion service with a receipt that is cryptographically bound to the digital certificate and the user profile.

In an example embodiment, the at least one processor is further configured to cause, according to the computer program code, the user data terminal to automatically gather with the user interface user data into a user profile, the data comprising personal information of a user of the user data terminal and preference data of the user.

In an example embodiment, the at least one processor is further configured to cause, according to the computer program code, the user data terminal to automatically determine that the presented messages were presented according to one or more presentation criteria for the messages received from the companion service.

In an example embodiment, the at least one processor is further configured to cause, according to the computer program code, the user data terminal to automatically obtain the one or more presentation criteria for the messages received from the companion service.

In an example embodiment, the at least one processor is further configured to cause, according to the computer program code, the user data terminal to automatically indicate by the receipt that the presented messages were presented according to one or more presentation criteria for the messages received from the companion service.

In an example embodiment, the one or more presentation criteria at least include continuous presentation of the entire message.

In an example embodiment, the at least one processor is further configured to cause, according to the computer program code, the user data terminal to automatically
obtain authorisation information from the companion service for enabling the user to gain a temporally constrained access to a further service after meeting the presentation criteria for a subset of messages; and
enable the user to access the further service with the obtained authorisation information.

According to a second example aspect there is provided a backend service system, comprising
at least one memory comprising computer program code; and
at least one processor configured to cause, according to the computer program code, the backend service system to automatically
enable a user to sign into a personal user profile of a companion service with a mobile application that is cryptographically associated with a digital certificate;
maintain a plurality of messages intended to be delivered to different users of the companion service;
identify a relevant subset of messages for the user, out of the plurality of messages, based on at least the personal user profile of the user;
provide the mobile application with the subset of messages for presenting to the user;
receive a receipt from the mobile application indicative of presenting the subset of messages to the user; and
authenticate the receipt using the digital certificate and the user profile.

In an example embodiment, the at least one processor is further configured to cause, according to the computer program code, the backend service system to automatically provide the mobile application with authorisation information for enabling the user to gain a temporally constrained access to a further service.

In an example embodiment, the at least one processor is further configured to cause, according to the computer program code, the backend service system to automatically
cryptographically verify with the receipt that the subset of messages has been presented to the user according to one or more presentation criteria; and
responsively provide the mobile application with access information for authorising the user to gain a temporally constrained access to a further service.

In an example embodiment, the at least one processor is further configured to cause, according to the computer program code, the backend service system to automatically
obtain the plurality of messages from one or more message sources;
to associate the messages with message specific attributes; and
to map the message specific attributes with the user profile in the identifying of the relevant subset of messages.

In an example embodiment, the at least one processor is further configured to cause, according to the computer program code, the backend service system to automatically maintain the user profiles of a plurality of users linked with encryption keys of the users such that the backend service system and the user have access to read and verify data stored in each user profile.

In an example embodiment, the at least one processor is further configured to cause, according to the computer program code, the backend service system to automatically enable third parties to have a pseudonymised access to such parts of the user profile to which the user has allowed the access by the third parties.

According to a third example aspect there is provided a method in a user data terminal comprising
storing a mobile application that is cryptographically associated with a digital certificate; and automatically
signing the user into a personal user profile of a companion service with the mobile application or prompting the user to perform the signing into the personal user profile;
monitoring by the mobile application incoming messages from the companion service when signed into the personal user profile, and accordingly presenting the incoming messages to the user with the user interface; and
acknowledging presented messages to the companion service with a receipt that is cryptographically bound to the digital certificate and the user profile.

According to a fourth example aspect there is provided a method in a backend service system, comprising automatically
enabling a user to sign into a personal user profile of a companion service with a mobile application that is cryptographically associated with a digital certificate;
maintaining a plurality of messages intended to be delivered to different users of the companion service;
identifying a relevant subset of messages for the user, out of the plurality of messages, based on at least the personal user profile of the user;
providing the mobile application with the subset of messages for presenting to the user;
receiving a receipt from the mobile application indicative of presenting the subset of messages to the user; and
authenticating the receipt using the digital certificate and the user profile.

According to a fifth example aspect there is provided a computer program comprising computer executable program code which when executed by at least one processor causes an apparatus at least to perform the method of the third or fourth example aspect.

According to a sixth example aspect there is provided a computer program product comprising a non-transitory computer readable medium having the computer program of the third or fourth example aspect stored thereon.

According to a seventh example aspect there is provided an apparatus comprising means for performing the method of the third or fourth example aspect.

Any foregoing memory medium may comprise a digital data storage such as a data disc or diskette; optical storage; magnetic storage; holographic storage; opto-magnetic storage; phase-change memory; resistive random-access memory; magnetic random-access memory; solid-electrolyte memory; ferroelectric random-access memory; organic memory; or polymer memory. The memory medium may be formed into a device without other substantial functions than storing memory or it may be formed as part of a device with other functions, including but not limited to a memory of a computer; a chip set; and a sub assembly of an electronic device.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:
Fig. 1 schematically shows a system according to an example embodiment;
Fig. 2 shows a block diagram of an apparatus according to an example embodiment;
Figs. 3a and 3b show a flow chart according to an example embodiment; and
Figs. 4a and 4b show a flow chart of a process according to an example embodiment.

### DETAILED DESCRIPTION

In the following description, like reference signs denote like elements or steps.

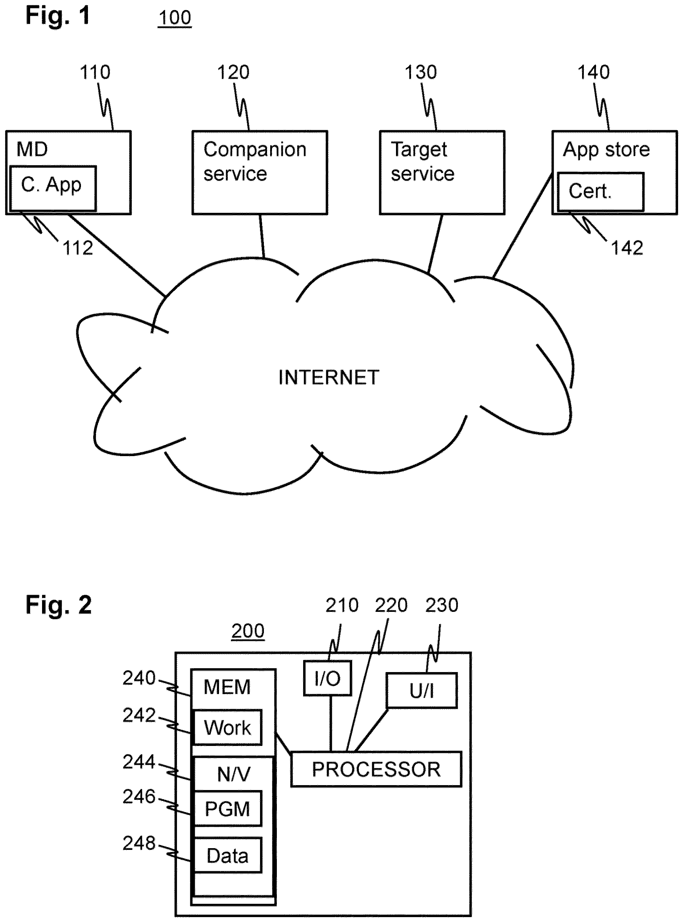

Fig. 1 schematically shows a system according to an example embodiment. The system comprises a mobile device 110; a companion service 120; and a target service 130. In an example embodiment, the companion service is implemented on a dedicated server or a computer cloud. While some aspects of the companion service may be implemented at the mobile device 110, reference to the companion service 120 can also be understood as reference to such server performed functionalities unless otherwise understandable from the context, or explicitly so stated.

The mobile device 110 is, for example, a tablet computer or a smartphone. The mobile device 110 generally has a capability of installing applications from an application store 140 of an operating system provider of the mobile device 110. In Fig. 1, the mobile device 110 hosts a companion application 112 or companion app in short.

The target service, like the companion service, may also be partially implemented at the mobile device 110. However, reference to the target service 120 can also be understood as reference to server performed functionalities unless otherwise understandable from the context, or explicitly so stated.

Fig. 1 further illustrates the application store 140, a certificate 142 of the application store, for digitally signing applications provided by the application store 140, and the Internet 150 for interconnecting various entities. In the context of present disclosure, the Internet is used interchangeably with any data network, such as an Intranet, that provides for sufficient data connectivity to use at least any example embodiment.

Fig. 2 shows a block diagram of an apparatus 200 according to an example embodiment. The apparatus 200 comprises a communication interface 210; a processor 220; a user interface 230; and a memory 240.

The communication interface 210 comprises in an embodiment a wired and/or wireless communication circuitry, such as Ethernet; Wireless LAN; Bluetooth; GSM; CDMA; WCDMA; LTE; and/or 5G circuitry. The communication interface can be integrated in the apparatus 200 or provided as a part of an adapter, card or the like, that is attachable to the apparatus 200. The communication interface 210 may support one or more different communication technologies. The apparatus 200 may also or alternatively comprise more than one of the communication interfaces 210.

In this document, a processor may refer to a central processing unit (CPU); a microprocessor; a digital signal processor (DSP); a graphics processing unit; an application specific integrated circuit (ASIC); a field programmable gate array; a microcontroller; or a combination of such elements.

The user interface may comprise a circuitry for receiving input from a user of the apparatus 200, e.g., via a keyboard; graphical user interface shown on the display of the apparatus 200; speech recognition circuitry; or an accessory device; such as a headset; and for providing output to the user via, e.g., a graphical user interface or a loudspeaker.

The memory 240 comprises a work memory 242 and a persistent memory 244 configured to store computer program code 246 and data 248. The memory 240 may comprise any one or more of: a read-only memory (ROM); a programmable read-only memory (PROM); an erasable programmable read-only memory (EPROM); a random-access memory (RAM); a flash memory; a data disk; an optical storage; a magnetic storage; a smart card; a solid-state drive (SSD); or the like. The apparatus 200 may comprise a plurality of the memories 240. The memory 240 may be constructed as a part of the apparatus 200 or as an attachment to be inserted into a slot; port; or the like of the apparatus 200 by a user or by another person or by a robot. The memory 240 may serve the sole purpose of storing data or be constructed as a part of an apparatus 200 serving other purposes, such as processing data.

A skilled person appreciates that in addition to the elements shown in Figure 2, the apparatus 200 may comprise other elements, such as microphones; displays; as well as additional circuitry such as input/output (I/O) circuitry; memory chips; application-specific integrated circuits (ASIC); processing circuitry for specific purposes such as source coding/decoding circuitry; channel coding/decoding circuitry; ciphering/deciphering circuitry; and the like. Additionally, the apparatus 200 may comprise a disposable or rechargeable battery (not shown) for powering the apparatus 200 if external power supply is not available.

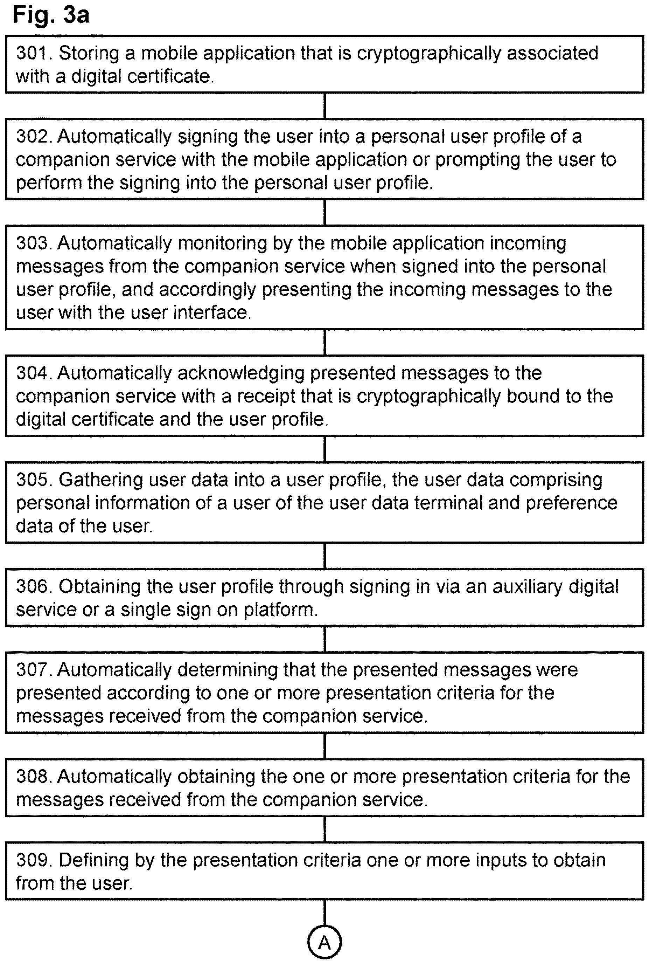

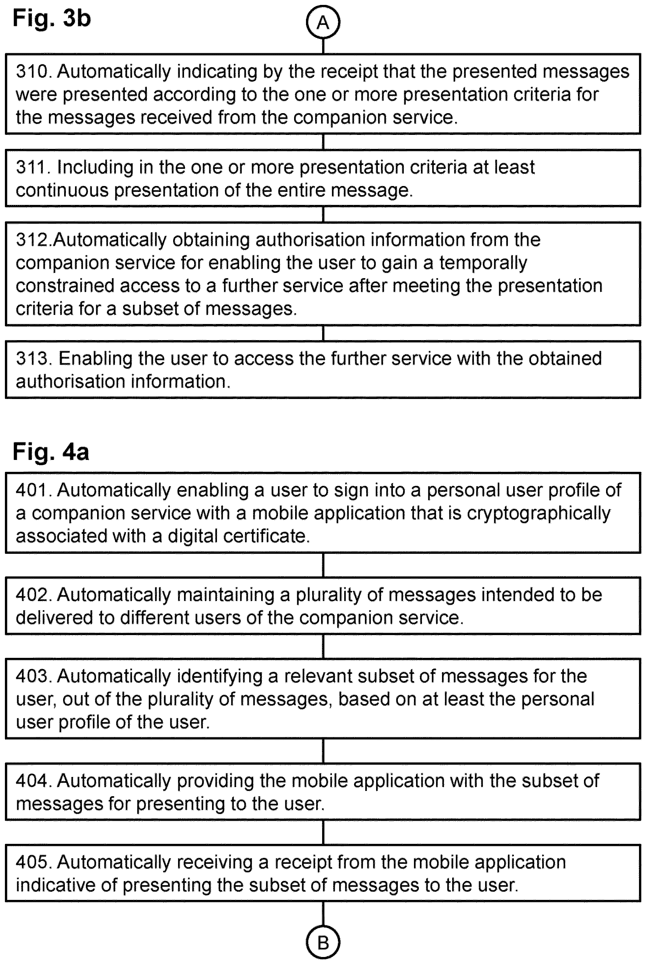

Fig. 3 shows a flow chart according to an example embodiment. Fig. 3 illustrates a process comprising various possible steps including some optional steps while also further steps can be included and/or some of the steps can be performed more than once:
301. Storing a mobile application that is cryptographically associated with a digital certificate. In an example embodiment, the mobile application is cryptographically bound to a given combination of equipment and operating system so as to inhibit unauthorised modification or tampering of either or both the equipment and operating system.
302. Automatically signing the user into a personal user profile of a companion service with the mobile application or prompting the user to perform the signing into the personal user profile. For example, the mobile device may allow the user to sign in with a username and password, biometric credentials such as a faceid, single-sign on, network bank authentication, or a digital identity card.
303. Automatically monitoring by the mobile application incoming messages from the companion service when signed into the personal user profile, and accordingly presenting the incoming messages to the user with the user interface.
304. Automatically acknowledging presented messages to the companion service with a receipt that is cryptographically bound to the digital certificate and the user profile.

In an example embodiment, the process further comprises any one or more of the following 305. Gathering user data into a user profile, the user data comprising personal information of a user of the user data terminal and preference data of the user.
306. Obtaining the user profile through signing in via an auxiliary digital service or a single sign on platform.
307. Automatically determining that the presented messages were presented according to one or more presentation criteria for the messages received from the companion service. In an example embodiment, the presentation criteria comprise one or more temporal criteria. In an example embodiment, the presentation criteria comprise one or more geographical criteria. In an example embodiment, the presentation criteria comprise one or more environmental criteria such as presence of given mobile or wireless LAN networks. Circumstances of the presenting of the messages may be monitored against the criteria and any deviations may be recorded, or simply whether the presenting did satisfy the presentation criteria. The presentation criteria may comprise a limit of minimum number of messages presented in a given period of time. The presentation criteria may comprise a limit of maximum number of messages presented in a given period of time. The presentation criteria may comprise a requirement to manually acknowledge a message within a set response time.
308. Automatically obtaining the one or more presentation criteria for the messages received from the companion service. In an example embodiment, the presentation criteria are preset in the companion application.
309. Defining by the presentation criteria one or more inputs to obtain from the user. The inputs may be embedded with the acknowledgments of presentation.
310. Automatically indicating by the receipt that the presented messages were presented according to the one or more presentation criteria for the messages received from the companion service. In an example embodiment, the indication is cryptographically protected based on the certificate of the companion application. Armed with such cryptographically protected indication, the companion service may be enabled to reliably ensure the presentation of desired messages to the user.
311. Including in the one or more presentation criteria at least continuous presentation of the entire message. In an example embodiment, the continuous presentation is verified to reduce a risk that important information, such as security advisory, go unnoticed to the user by intermittently viewing the presentation among various third-party services.
312. Automatically obtaining authorisation information from the companion service for enabling the user to gain a temporally constrained access to a further service after meeting the presentation criteria for a subset of messages. In an example embodiment, the authorisation information comprises a code that directly provides the temporally constrained access to the further service. In an example embodiment, the authorisation information comprises a token that is exchangeable to a right or indirect right granting instrument that ultimately provides the temporally constrained access to the further service.
313. Enabling the user to access the further service with the obtained authorisation information. In an example embodiment, the enabling comprises presenting a code for the user to copy and paste into the further service. In an example embodiment, the enabling comprises writing the code into a memory area or file in the mobile device or in an external location such that the further service automatically gains the code.

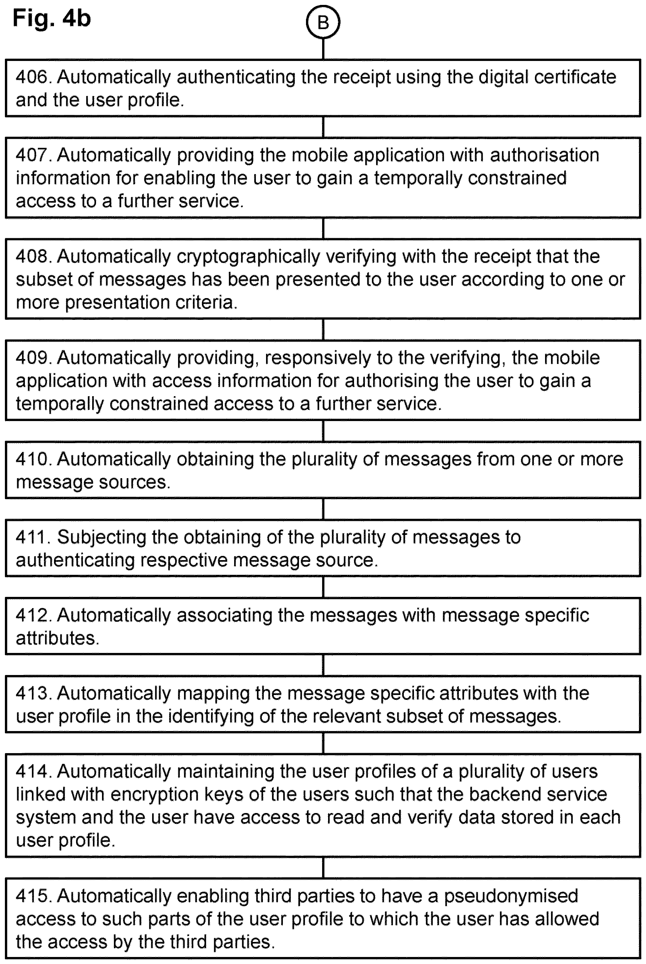

Figs. 4a and 4b show a flow chart of a process according to an example embodiment. The process may be performed in a backend service system. The process may comprise various possible steps including some optional steps while also further steps can be included and/or some of the steps can be performed more than once, including any of:
401. Automatically enabling a user to sign into a personal user profile of a companion service with a mobile application cryptographically associated with a digital certificate.
402. Automatically maintaining a plurality of messages intended to be delivered to different users of the companion service.
403. Automatically identifying a relevant subset of messages for the user, out of the plurality of messages, based on at least the personal user profile of the user.
404. Automatically providing the mobile application with the subset of messages for presenting to the user.
405. Automatically receiving a receipt from the mobile application indicative of presenting the subset of messages to the user.
406. Automatically authenticating the receipt using the digital certificate and the user profile.

In an example embodiment, the process further comprises any one or more of the following
407. Automatically providing the mobile application with authorisation information for enabling the user to gain a temporally constrained access to a further service.
408. Automatically cryptographically verifying with the receipt that the subset of messages has been presented to the user according to one or more presentation criteria.
409. Automatically providing, responsively to the verifying, the mobile application with access information for authorising the user to gain a temporally constrained access to a further service.
410. Automatically obtaining the plurality of messages from one or more message sources.
411. Subjecting the obtaining of the plurality of messages to authenticating respective message source.
412. Automatically associating the messages with message specific attributes.
413. Automatically mapping the message specific attributes with the user profile in the identifying of the relevant subset of messages.
414. Automatically maintaining the user profiles of a plurality of users linked with encryption keys of the users such that the backend service system and the user have access to read and verify data stored in each user profile.
415. Automatically enabling third parties to have a pseudonymised access to such parts of the user profile to which the user has allowed the access by the third parties.

It is a technical effect of at least some example embodiments that use of a further service, such as a desired digital service, may be subjected to controlled consumption of supplementary messages. Actual presentation of the supplementary messages may be verified by using a dedicated service and application that is cryptographically associated with a reliable source such as an application store. The acknowledgements of the presented messages can also be cryptographically verified such that falsified acknowledgements can be rejected to mitigate various vulnerabilities. It is a further technical effect that various example embodiments of present disclosure are usable over non-secure network connections. This is particularly useful for allowing use of public non-secured wireless local area network access points.

Any of the afore described methods, method steps, or combinations thereof, may be controlled or performed using hardware; software; firmware; or any combination thereof. The software and/or hardware may be local; distributed; centralised; or any combination thereof. Moreover, any form of computing, including computational intelligence, may be used for controlling or performing any of the afore described methods, method steps, or combinations thereof. Computational intelligence may refer to, for example, any of artificial intelligence; neural networks; fuzzy logics; machine learning; genetic algorithms; evolutionary computation; or any combination thereof.

Various embodiments have been presented. It should be appreciated that in this document, words comprise; include; and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A user data terminal comprising
a user interface;
at least one memory comprising computer program code; and
at least one processor configured to cause, according to the computer program code, the user data terminal to store a mobile application that is cryptographically associated with a digital certificate;
the at least one processor being further configured to cause, according to the computer program code, the user data terminal to automatically
sign the user into a personal user profile of a companion service with the mobile application or prompt the user to perform the signing into the personal user profile;
monitor by the mobile application incoming messages from the companion service when signed into the personal user profile, and accordingly present the incoming messages to the user with the user interface; and
acknowledge presented messages to the companion service with a receipt that is cryptographically bound to the digital certificate and the user profile.

2. The user data terminal of claim 1, wherein the at least one processor is further configured to cause, according to the computer program code, the user data terminal to automatically gather with the user interface user data into a user profile, the data comprising personal information of a user of the user data terminal and preference data of the user.

3. The user data terminal of claim 1 or 2, wherein the at least one processor is further configured to cause, according to the computer program code, the user data terminal to automatically determine that the presented messages were presented according to one or more presentation criteria for the messages received from the companion service.

4. The user data terminal of claim 3, wherein the at least one processor is further configured to cause, according to the computer program code, the user data terminal to automatically obtain the one or more presentation criteria for the messages received from the companion service.

5. The user data terminal of claim 3 or 4, wherein the at least one processor is further configured to cause, according to the computer program code, the user data terminal to automatically indicate by the receipt that the presented messages were presented according to one or more presentation criteria for the messages received from the companion service.

6. The user data terminal of any one of claims 3 to 5, wherein the one or more presentation criteria at least include continuous presentation of the entire message.

7. The user data terminal of any one of claims 3 to 6, wherein the at least one processor is further configured to cause, according to the computer program code, the user data terminal to automatically
obtain authorisation information from the companion service for enabling the user to gain a temporally constrained access to a further service after meeting the presentation criteria for a subset of messages; and
enable the user to access the further service with the obtained authorisation information.

8. A backend service system, comprising
at least one memory comprising computer program code; and
at least one processor configured to cause, according to the computer program code, the backend service system to automatically
enable a user to sign into a personal user profile of a companion service with a mobile application that is cryptographically associated with a digital certificate;
maintain a plurality of messages intended to be delivered to different users of the companion service;
identify a relevant subset of messages for the user, out of the plurality of messages, based on at least the personal user profile of the user;
provide the mobile application with the subset of messages for presenting to the user;
receive a receipt from the mobile application indicative of presenting the subset of messages to the user; and
authenticate the receipt using the digital certificate and the user profile.

9. The backend service system of claim 8, wherein the at least one processor is further configured to cause, according to the computer program code, the backend service system to automatically provide the mobile application with authorisation information for enabling the user to gain a temporally constrained access to a further service.

10. The backend service system of claim 9, wherein the at least one processor is further configured to cause, according to the computer program code, the backend service system to automatically
cryptographically verify with the receipt that the subset of messages has been presented to the user according to one or more presentation criteria; and
responsively provide the mobile application with access information for authorising the user to gain a temporally constrained access to a further service.

11. The backend service system of any one of claims 8 to 10, wherein the at least one processor is further configured to cause, according to the computer program code, the backend service system to automatically
obtain the plurality of messages from one or more message sources;
to associate the messages with message specific attributes; and
to map the message specific attributes with the user profile in the identifying of the relevant subset of messages.

12. The backend service system of any one of claims 8 to 10, wherein the at least one processor is further configured to cause, according to the computer program code, the backend service system to automatically maintain the user profiles of a plurality of users linked with encryption keys of the users such that the backend service system and the user have access to read and verify data stored in each user profile.

13. The backend service system of claim 12, wherein the at least one processor is further configured to cause, according to the computer program code, the backend service system to automatically enable third parties to have a pseudonymised access to such parts of the user profile to which the user has allowed the access by the third parties.

14. A method in a user data terminal comprising
storing a mobile application that is cryptographically associated with a digital certificate; and automatically
signing the user into a personal user profile of a companion service with the mobile application or prompting the user to perform the signing into the personal user profile;
monitoring by the mobile application incoming messages from the companion service when signed into the personal user profile, and accordingly presenting the incoming messages to the user with the user interface; and
acknowledging presented messages to the companion service with a receipt that is cryptographically bound to the digital certificate and the user profile.

15. A method in a backend service system, comprising automatically
enabling a user to sign into a personal user profile of a companion service with a mobile application that is cryptographically associated with a digital certificate;
maintaining a plurality of messages intended to be delivered to different users of the companion service;
identifying a relevant subset of messages for the user, out of the plurality of messages, based on at least the personal user profile of the user;
providing the mobile application with the subset of messages for presenting to the user;
receiving a receipt from the mobile application indicative of presenting the subset of messages to the user; and
authenticating the receipt using the digital certificate and the user profile.
